# EUROPEAN PATENT APPLICATION

(11) **EP 1 335 626 A2**
(43) Date of publication of application: **13.08.2003**
(21) Application number: 03002189.3
(22) Date of filing: 04.02.2003
(51) Int. Cl.: H04Q 11/00, H04J 14/02

(54) **High speed healing ring for optical transport networks**

(30) Priority: 07.02.2002 US 355717 P
(71) Applicant: Alcatel Internetworking, Inc., Calabasas, D.C. 20036 (US)
(72) Inventor: Vandenhoudt, Jan, 2300 Turnhout (BE)
(74) Representative: Dreiss, Fuhlendorf, Steimle & Becker

(57) **Abstract**

A high speed healing ring having a plurality of nodes is provided. The high speed healing ring includes a first link that is capable of carrying a first data in a first optical signal, which has a first wavelength, from a first node to a second node. The ring network also has a second link that is capable of carrying the first data in a second optical signal, which also has the first wavelength, from the first node to the second node. At least one of said first and second optical signals passes through at least one other node between the first node and the second node. By providing redundancy in the ring network through physical layer interface using optical add-drop multiplexers (OADMs), cost of the system may be reduced while providing a faster response time, as compared to systems based on Synchronous Optical NETwork (SONET) or Resilient Packet Ring (RPR).

## Description

### FIELD OF THE INVENTION

The present invention is related to optical transport networks, and in particular to a high speed healing ring that enables IP (Internet Protocol) and other optical transport networks to recover from link failures.

### BACKGROUND

Healing or link restoration has always been an important feature of Synchronous Optical NETwork (SONET), which includes a family of fiber optic transmission rates created to provide the flexibility needed to transport many digital signals with different capacities and provide a design standard for manufacturers.

Automatic Protection Switching (APS) achieves this healing or link restoration where two network nodes are connected through an active link that is protected by a redundant link. The standard time to switch over to the redundant link (in case the protected link fails) is standardized to 50 ms (milliseconds). Now, with the advent of DWDM (dense wave division multiplexing) optics, use of redundant fiber may not be justifiable anymore. The cost of providing a double amount of fiber within even a medium size ring can be the single largest cost in a total network. In addition to the redundancy of the fibers, all the optical transceivers and the electrical termination of the data link are typically redundant as well. This typically makes SONET (or SDH (Synchronous Digital Hierarchy)) infrastructure very expensive.

At present, a new standard, Resilient Packet Ring (RPR), is being defined for ring configured Data networks. RPR achieves about the same link restoration protection and recovery time as SONET or SDH but does not rely on SONET or SDH and requires a new protocol at the data link layer (Layer 2). In addition, RPR requires additional hardware to support the new protocol. Further, the RPR solution requires additional processing and provisioning of bandwidth for redundant traffic, which typically leads to additional system cost.

Therefore, it is desirable to provide a method and apparatus to lower system cost while not requiring additional processing and provisioning of bandwidth for redundant traffic.

### SUMMARY

In an exemplary embodiment according to the present invention, a ring network is provided. The ring network comprises: a plurality of nodes; a first link capable of carrying a first data in a first optical signal having a first wavelength from a first node to a second node; and a second link capable of carrying the first data in a second optical signal having the first wavelength from the first node to the second node, wherein at least one of said first and second optical signals passes through at least one other node between the first node and the second node.

In another exemplary embodiment according to the present invention, a ring network is provided. The ring network comprises: a plurality of nodes arranged in a ring configuration; and a plurality of pairs of links, each pair of links together forming a circle of the ring configuration, each node capable of transmitting at least one pair of redundant optical signals having a predetermined wavelength to at least one other node over at least one pair of links, wherein each pair of redundant optical signals have the predetermined wavelength different from the wavelengths of all other pairs of redundant optical signals, and said at least one other node receives said at least one pair of optical signals by taking them off the respective links through a physical layer interface.

In yet another exemplary embodiment according to the present invention, a method of providing redundancy in a ring network comprising a plurality of nodes is provided. The method comprises: transmitting a first optical signal representing a first data and having a first wavelength from a first node to a second node over a first link; and transmitting a second optical signal representing the first data and having the first wavelength from the first node to the second node over a second link, wherein at least one of said first and second optical signals passes through at least one other node between the first node and the second node.

In still another exemplary embodiment according to the present invention, a ring network is provided. The ring network comprises a plurality of nodes arranged in a ring topology, wherein each node transmits same data on the ring both in a clockwise direction and a counter-clockwise direction concurrently.

### BRIEF DESCRIPTION OF THE DRAWINGS

These and other features, aspects, and advantages of the present invention will become better understood with regard to the following description, appended claims, and accompanying drawings where:
FIG. 1 is a system diagram of a high speed healing ring network in an exemplary embodiment according to the present invention;
FIG. 2 is a block diagram of a node 200 of a high speed healing ring network in an exemplary embodiment according to the present invention; and
FIG. 3 is a block diagram of a node 300 of a high speed healing ring network in another exemplary embodiment according to the present invention.

### DETAILED DESCRIPTION

In an exemplary embodiment according to the present invention, a high speed healing ring for computer networks ("ring network") is provided. The high speed healing ring of the present invention does not require additional processing because the redundancy is provided at the lowest possible layer (i.e., physical layer), and does not require a new protocol at a higher layer (e.g., data link layer). In fact, the ring network of the present invention is capable of operating with any protocol of system designer's choice including, but not limited to, SONET and Ethernet. The use of the physical layer to provide redundancy also should result in faster response time than designs that provide redundancy using higher layers.
The ring network has a ring configuration. However, it should be noted that the ring configuration refers to the topology of optical fiber and nodes, and not necessarily to the traffic pattern nor to the network configuration. Hence, in an exemplary embodiment, the network configuration may be a star configuration or a hub and spoke network that overlays the ring topology. In this case, one of the nodes is the originator or the destination of each PDU on the ring, and all other nodes would only send optical signals to that one node and receive optical signals from that same node.

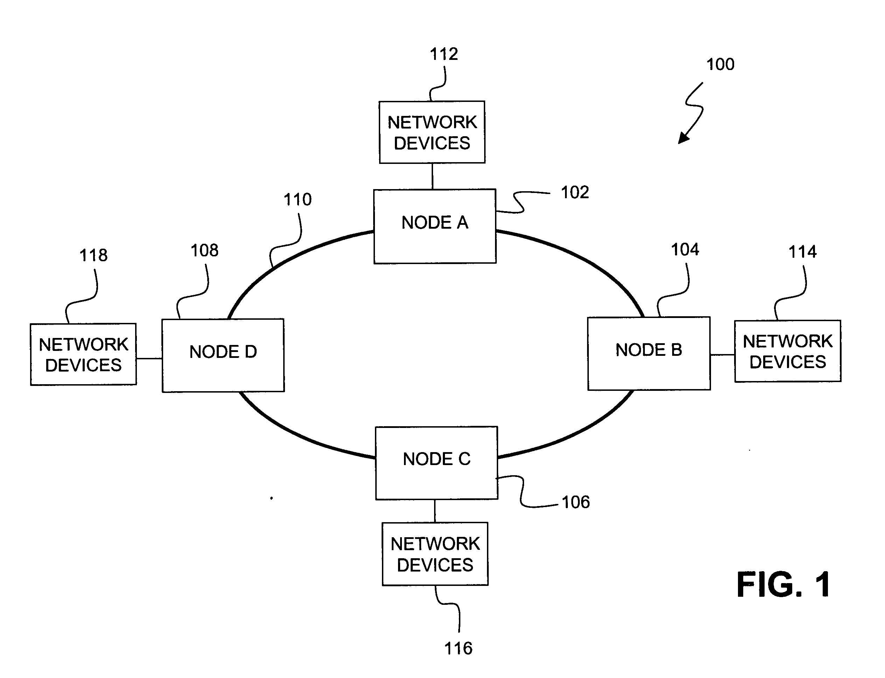

FIG. 1 is a system diagram of a ring network 100 in an exemplary embodiment according to the present invention. The ring network 100 (which may also be referred to as a high speed healing ring) includes nodes 102, 104, 106 and 108, and an optical fiber ring 110 that connects the nodes together in a ring, where each node is connected to two adjacent nodes. Each of the nodes 102, 104, 106 and 108 is allocated specific transmit and receive wavelengths. It should be noted that no wavelength should be used to transmit from more than one node. It should also be noted that no two nodes should be capable of receiving optical signals having the same wavelength.

The nodes 102, 104, 106 and 108 are also coupled to one or more network devices 112, 114, 116 and 118, respectively. The network devices 112, 114, 116 and 118 may communicate with the respective nodes by transmitting and receiving protocol data units (PDUs). The PDUs may include one or more of TCP/IP packets, UDP packets, ATM cells, Ethernet frames, or other data units for communication of video, audio and/or data known to those skilled in the art. The PDUs may also be referred to as packets herein. Further, data may be used to universally refer to all information carried by the PDUs including audio, video, data, etc.

Each of the nodes transmits and receives on the optical fiber ring 110 in both directions, that is, in both clockwise and counter-clockwise directions. For example, in FIG. 1, the link from the node A 102 to the node B 104 is set up redundantly. The node A 102 may transmit in a clockwise direction to node B 104 on a first link without any other node in between. The node A 102 may also transmit in a counter-clockwise direction to node B 104 on a second link through the node D 108 and the node C 106. The shorter of the links between two nodes may be referred to as an active (or primary) link, while the longer of the links may be referred to as a redundant link.

FIG. 1 shows only four nodes 102, 104, 106 and 108 for illustrated purposes only. In practice, the ring network 100 may include more or less number of nodes than four. In the exemplary embodiment, the number of nodes in the ring network 100 may be limited only by the amount of attenuation of the optical signal at each node.

The data transmitted from each node in both the clockwise and counter-clockwise directions (links) should be carried over the same wavelength (λτ), but travel in opposite directions around the ring. The data received by each node may also have traveled in clockwise or counter-clockwise directions over the same wavelength (λρ). The transmit wavelength λτ should typically be different from the receive wavelength λρ because the receive wavelength of a node corresponds to a transmit wavelength of another node and the nodes should transmit using different wavelengths (λ's: lambdas).

While each node should be allocated with at least one wavelength over which it transmits optical signals, and at least one wavelength over which it receives optical signals, the nodes may transmit and receive over more than one allocated wavelengths. The number of wavelengths used by each node for transmitting and/or receiving, for example, may depend on the traffic needs of the node. (e.g., load/bandwidth required of the node by the respective network devices coupled to the node).

When the node A 102 transmits an optical signal (carrying information) to the node B 104 on the redundant link (i.e., in the counter-clockwise direction), it passes through the nodes 106 and 108 to reach the node B 104. It can be said that the optical signal transparently passes through the nodes 106 and 108 since these nodes do not take off or receive the optical signal from the network ring. The optical signal, however, may be attenuated at each of the nodes D 108 and C 106, which may also be referred to as transit nodes.

In an exemplary embodiment, two nodes may use at least two wavelengths to establish both way (i.e., bidirectional) communications. Since each link between two nodes within the ring uses a different wavelength (λ), a ring with N nodes with connections only between adjacent nodes would require at least 2 x N wavelengths (λ's). Further, the ring with N nodes with a completely meshed connections (i.e., each node is coupled with every other node) would require at least N x (N-1) wavelengths (λ's). Of course, the number of wavelengths may increase if more than one wavelength is used between any pair of transmitting and receiving nodes based on the traffic needs of the ring network.

By way of example, the ring network 100 of FIG. 1 may be implemented with four (4) wavelengths if the node A 102 transmits only to the node B 104, the node B transmits only to the node C 106, the node C transmits only to the node D 108, and the node D transmits only to the node A 102. Further, twelve (12) wavelengths would be used to transmit from each of the four nodes to three other nodes. Of course, additional wavelengths would be used to transmit using more than one wavelength from any node to any other node.

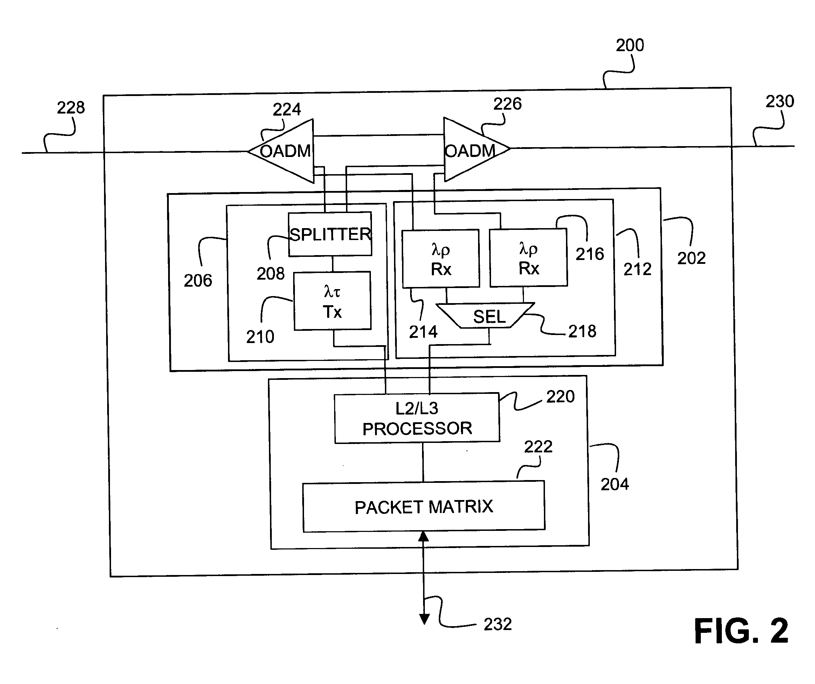

FIG. 2 illustrates a node 200 of a ring network, such as the ring network 100 of FIG. 1. The node 200, for example, may be used in the ring network 100 as any of the nodes 102, 104, 106 and 108. The node 200 includes a pair of OADMs (optical add-drop multiplexers) 224 and 226 that are used to transmit and receive optical signals having at least one wavelength on the ring network over optical fiber links 228 and 230, respectively. For example, each OADM may filter optical signals having one or more wavelengths out of all colors (wavelengths) passing through the optical fiber links. Further, each OADM may add optical signals having one or more colors (wavelengths) on the respective optical fiber links.
In an exemplary embodiment, the OADMs can be programmed (i.e., tuned to different wavelengths) to receive and transmit optical signals having at least one of the wavelengths available on the DWDM signal on the ring network. For example, the DWDM signal in the exemplary embodiment may have 100 different wavelengths. In other embodiments, the DWDM signals may have more or less than 100 different wavelengths. Further, each OADM may be programmed to drop (extract) and/or add (insert) optical signals at 1, 2, 4, 8 or more different wavelengths. In other exemplary embodiments, the OADM may not be programmable and may only be able to receive and transmit using a single predetermined wavelength.
The node 200 also includes an electro-optical (E/O) transceiver logic 202 and a router box 204. The router box 204 may be referred to as a data network element, and may, for example, be an IP router box. In other exemplary embodiments, the data network element may be, but is not limited to, a switch (ATM, MPLS or RPR), an aggregator or an optical cross connect.
The E/O transceiver logic 202 includes a transmitter 206 and a receiver 212 that transmit and receive, respectively, at add and drop frequencies that the OADMs operate at. The transmitter 206 includes an E/O transmitter 210 that converts electrical signals from the router box 204 to optical signals (e.g., into colored light according to the ITU (International Telecommunications Union) grid) having a wavelength λτ. The transmitter 206 also includes a beam splitter 208 that optically splits the optical signals (colored light) and provide to the OADMs 226 and 224 for transmission in clockwise and counter-clockwise directions, respectively. Since OADMs 226 and 224 add optical signal portions split by the beam splitter 208 on the optical fiber links 230 and 228, respectively, they may be considered as transmitting the split optical signal portions in clockwise and counter-clockwise directions substantially simultaneously (or concurrently).
The optical signal portions provided to the OADMs 226 and 224 may have substantially equal intensity (e.g., 50% each of the optical signal generated by the E/O transmitter 210). In practice, however, the intensity of the optical signals (i.e., light portions) provided to the OADMs 226 and 224 may be different to account for the different amount of attenuation faced by the optical signals in different directions (links). By way of example, referring back to FIG. 1, the link between the node A 102 and the node B 104 in the clockwise direction is shorter in length than the link between the same in the counter-clockwise direction. Further, the optical signal travelling between the nodes A 102 and B 104 must pass through the OADMs of the nodes C 106 and D 108 (hence, transit nodes), and be attenuated at each OADM. Therefore in this case, it may make sense to make the intensity (or strength) of the optical signal in the counter-clockwise direction at the output of the node A 102 higher than the intensity of the optical signal in the clockwise direction.

Referring now to FIG. 2 again, the receiver 212 includes E/O receivers 214 and 216, which receive optical signals (colored light) having wavelength of λρ filtered by the OADMs 224 and 226, respectively. The E/O receivers 214 and 216 converts these optical signals to electrical signals and provide them to a selector 218. The selector 218 has a logic to select the electrical signal that better represents original information that was transmitted. In other embodiments, the selector may actually combine the two electrical signals to generate the output.
The selector 218, for example, may compare the attenuation, signal-to-noise ratio (SNR) and/or quality of signal of the electrical signals (which depends on the quality of signal of the corresponding optical signals) to make the selection. Of course, if one of the signals is lost (e.g., synchronization loss or LOS: loss of signal), the selector 218 selects the other signal, whether active or redundant. The selector 218 may also use other criteria for selecting a better signal that is known to those skilled in the art. For example, the selector 218 may use a mechanism similar to the one used in SONET to select a good optical signal. The selector 218 provides the selected signal to the router box 204 for forwarding to the network devices coupled thereto over the interface(s) 232.

Of course, any transit node allows the signal to pass through without any conversion into the electrical domain. Hence, each node in a ring network performs the three functions described above. Each node will transmit to other nodes, receive from other nodes and transit the light paths that are set up between the other nodes in the ring.

The router box 204 as illustrated on FIG. 2 includes an L2/L3 processor 220 and a packet matrix 222. In the exemplary embodiment the router box 204 may also be referred to as an IP router box. The L2/L3 processor 220 receives incoming (i.e., ingress) packets from the receiver 212 and transmits outgoing (i.e., egress) packets to the transmitter 206.

On the ingress side, the L2/L3 processor 220 routes (or switches) the packets (e.g., IP packets) based, for example, on source and destination addresses of the packets. The L2/L3 processor 220 may also determine the priority of the packets based on one or more criteria such as QoS (Quality of Service) and the like. In other embodiments, the router box 204 may include an L2/L3/L4 processor or other type of processors for processing of higher/different layer information. The packet matrix 222 temporarily stores the packets routed by the L2/L3 processor 220, and forwards the packets towards their respective destinations over the interface(s) 232 to the network devices.

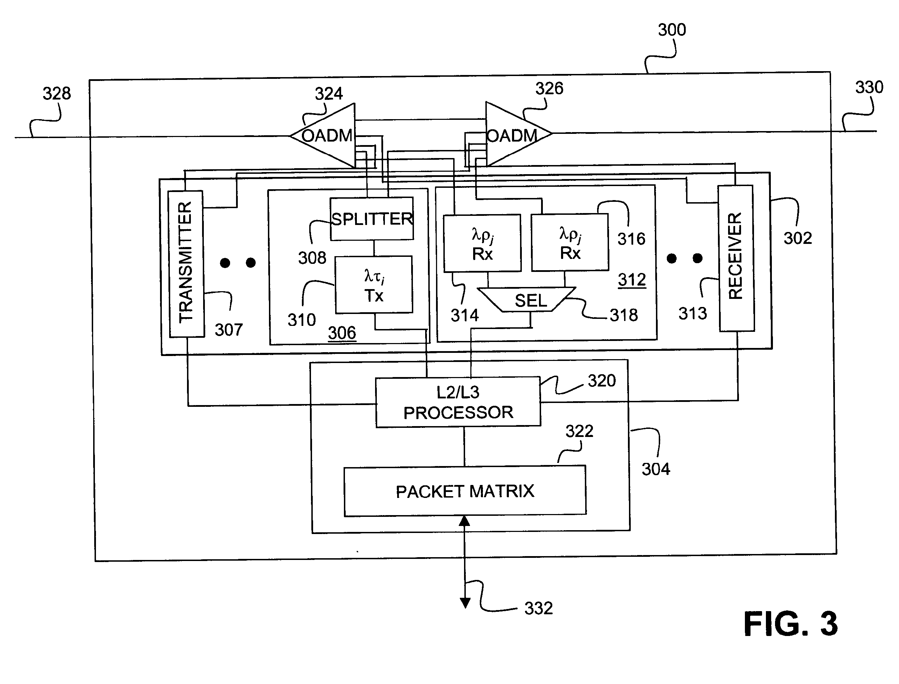

FIG. 3 is a block diagram of a node 300 of a ring network in another exemplary embodiment according to the present invention. The node 300 is similar to the node 200 of FIG. 2. The node 300, however, includes multiple transmitters and multiple receivers to transmit optical signals at multiple different colors (wavelengths) through OADMs 324 and 326. The node 300 of this exemplary embodiment, for example, may be used when it is desirable to use multiple wavelengths to transmit optical signals to a single other node. The node 300 may also be used to transmit optical signals having different wavelengths to different nodes. Further, the node 300 may also be used to transmit optical signals having multiple different wavelengths to a single node and also to transmit optical signals to multiple nodes. In node 300, an L2/L3 processor 320 should forward packets to different ones of the transmitters based on the packet forwarding criteria such as, for example, the desired destination node on the ring network.
A transmitter 307 is one of one or more transmitters (in addition to a transmitter 306) in an E/O transceiver logic 302. The transmitter 307 has a structure that is substantially identical to the structure of the transmitter 306, and includes an E/O transmitter and a beam splitter. However, while an E/O transmitter 310 in the transmitter 306 converts electrical signals into colored optical signals having wavelength λτ_{*i*}, the E/O transmitter in the transmitter 307 converts electrical signals into colored optical signals having wavelength *λτ*_{*k*} different from λτ_{*i*}. Likewise, any E/O transmitter in the node 300 should transmit optical signals at wavelengths that are different from that of other E/O transmitters. The beam splitter in the transmitter 307 splits the optical signals having wavelength λτ_{*k*} to provide to the OADMs 324 and 326.
A receiver 313 is one of one or more receivers (in addition to a receiver 312) in the E/O transceiver logic 302. The receiver 313 has a structure that is substantially identical to the structure of the receiver 312, and includes two E/O receivers and a selector to select between outputs of the two. However, while E/O receivers 314 and 316 in the receiver 312 receives colored optical signals having wavelength λρ_{*j*}, and converts them into electrical signals, the E/O receivers in the receiver 313 converts the colored optical signals having wavelength λρ_{*1*} different from λρ_{*j*}. Likewise, any pair of E/O receivers in the node 300 should receive and convert colored optical signals at wavelengths that are different from that of other pairs of E/O receivers. In the node 300, the OADMs 324 and 326 are programmed (i.e., wavelength tuned) to filter colored optical signals at multiple different wavelengths in order to provide the color optical signals having different wavelengths to different ones of the multiple receivers. The cost of an electro-optical system is typically determined largely by the cost of the optical devices. Hence, the exemplary embodiments according to the present invention should result in cost reduction to the healing or link restoration system because the cost of optical transceivers and OADMs has been reducing rapidly. In addition, since the cost of optical receivers is significantly lower than the cost of optical transmitters, the high speed healing ring in the exemplary embodiments, which uses twice as many receivers as transmitters, would also have an additional cost advantage. Further, the cost of optical splitters is reasonably small, and lambdas (λ's: different wavelengths) are abundantly available in DWDM systems at no additional cost.

It will be appreciated by those of ordinary skill in the art that the invention can be embodied in other specific forms without departing from the spirit or essential character hereof. The present description is therefore considered in all respects to be illustrative and not restrictive. The scope of the invention is indicated by the appended claims, and all changes that come within the meaning and range of equivalents thereof are intended to be embraced therein.

## Claims

1. A ring network comprising:
a plurality of nodes;
a first link capable of carrying a first data in a first optical signal having a first wavelength from a first node to a second node; and
a second link capable of carrying the first data in a second optical signal having the first wavelength from the first node to the second node,
wherein at least one of said first and second optical signals passes through at least one other node between the first node and the second node.

2. The ring network according to claim 1, wherein the first optical signal on the first link does not interfere with the second optical signal on the second link.

3. The ring network according to claim 1, wherein the first node comprises a first OADM (optical add-drop multiplexer) and a second OADM, wherein the first OADM adds the first optical signal on the first link and the second OADM adds the second optical signal on the second link.

4. The ring network according to claim 3, wherein the first node further comprises an electro-optic (E/O) transmitter capable of receiving an electrical signal representative of the first data and converting said electrical signal to an optical signal having the first wavelength.

5. The ring network according to claim 4, wherein the first node further comprises a beam splitter capable of splitting said optical signal to the first and second optical signals having the first wavelength and providing them, respectively, to the first and second OADMs.

6. The ring network according to claim 1, wherein the first link is capable of carrying a plurality of first data portions in a plurality of first optical signals having a plurality of first wavelengths from the first node to the second node, and the second link is capable of carrying said first data portions in a plurality of second optical signals having said first wavelengths from the first node to the second node,
wherein at least one of said first optical signals and said second optical signals pass through said at least one other node between the first node and the second node,
wherein the first node comprises a first OADM and a second OADM, and wherein the first OADM adds said first optical signals on the first link and the second OADM adds said second optical signals on the second link.

7. The ring network according to claim 1, further comprising:
a third link capable of carrying a second data in a third optical signal having a second wavelength from a third node to the first node; and
a fourth link capable of carrying the second data in a fourth optical signal having the second wavelength from the third node to the first node,
wherein at least one of said third and fourth optical signals passes through at least one other node between the third node and the first node.

8. The ring network according to claim 7, wherein the first node comprises a first OADM and a second OADM,
wherein the first OADM filters the third optical signal off the third link and the second OADM filters the fourth optical signal off the fourth link.

9. The ring network according to claim 8, wherein the first node further comprises:
a first electro-optic (E/O) receiver capable of receiving the third optical signal, and of converting the third optical signal into a first electrical signal representative of the second data;
a second E/O receiver capable of receiving the fourth optical signal, and of converting the fourth optical signal into a second electrical signal representative of the second data; and
a selector capable of receiving and using the first and second electrical signals to output an electrical signal representative of the second data.

10. The ring network according to claim 9, wherein the selector selects between the first and second electrical signals to output one of the first and second electrical signals that has a better quality.

11. The ring network according to claim 9, wherein the selector combines the first and second electrical signals to generate the output electrical signal.

12. The ring network according to claim 9, wherein the first node further comprises a data network element capable of handling protocol data units (PDUs) comprising the second data.

13. The ring network according to claim 12, wherein the data network element is a router box, a switch (ATM, MPLS or RPR), an aggregator or an optical cross connect.

14. The ring network of claim 12, wherein the first node is coupled to at least one network device, wherein the PDUs are forwarded to said at least one network device, and
wherein the first node receives PDUs comprising the first data from said at least one network device and uses them to generate the first and second optical signals.

15. The ring network according to claim 7, wherein the third link is capable of carrying a plurality of second data portions in a plurality of third optical signals having a plurality of second wavelengths from the third node to the first node, and the fourth link is capable of carrying said second data portions in a plurality of fourth optical signals having said second wavelengths from the third node to the first node,
wherein at least one of said third and fourth optical signals pass through said at least one other node between the third node and the first node,
wherein the first node comprises a first OADM and a second OADM, wherein the first OADM filters said third optical signals off the third link and the second OADM filters the fourth optical signals off the fourth link.

16. The ring network according to claim 1, wherein two nodes use at least two wavelengths to establish bidirectional communications.

17. A ring network comprising:
a plurality of nodes arranged in a ring configuration; and
a plurality of pairs of links, each pair of links together forming a circle of the ring configuration, each node capable of transmitting at least one pair of redundant optical signals having a predetermined wavelength to at least one other node over at least one pair of links,
wherein each pair of redundant optical signals have the predetermined wavelength different from the wavelengths of all other pairs of redundant optical signals, and said at least one other node receives said at least one pair of optical signals by taking them off the respective links through a physical layer interface.

18. The ring network according to claim 17, wherein each node comprises a pair of optical add-drop multiplexers (OADMs),
wherein each node adds said at least one pair of redundant optical signals onto said at least one pair of links using the pair of OADMs,
and wherein said at least one other node takes said at least one pair of redundant optical signals off the respective links by filtering them using the pair of OADMs.

19. The method according to claim 17, wherein the ring network has a star configuration, wherein one of the nodes transmits at least one pair of redundant optical signals to each of all other nodes, and receives at least one pair of redundant optical signals from each of said all other nodes.

20. A method of providing redundancy in a ring network comprising a plurality of nodes, the method comprising:
transmitting a first optical signal representing a first data and having a first wavelength from a first node to a second node over a first link; and
transmitting a second optical signal representing the first data and having the first wavelength from the first node to the second node over a second link,
wherein at least one of said first and second optical signals passes through at least one other node between the first node and the second node.

21. The method according to claim 20, wherein the first optical signal on the first link does not interfere with the second optical signal on the second link.

22. The method according to claim 20, wherein transmitting the first optical signal comprises transmitting a plurality of first optical signals, each representing one of a plurality of first data portions and having one of a plurality of first wavelengths, from the first node to the second node over the first link,
wherein transmitting the second optical signal comprises transmitting a plurality of second optical signals, each representing one of said plurality of first data portions and having one of said plurality of first wavelengths, from the first node to the second node over the second link, and
wherein at least one of said first optical signals and said second optical signals pass through said at least one other node between the first node and the second node.

23. The method according to claim 20, wherein the first node comprises a first OADM and a second OADM, and
wherein transmitting the first optical signal comprises adding the first optical signal on the first link through the first OADM, and transmitting the second optical signal comprises adding the second optical signal on the second link through the second OADM.

24. The method according to claim 20, further comprising:
receiving at the first node a plurality of PDUs representative of the first data from a network device;
generating an optical signal representative of the first data using the PDUs; and
splitting the optical signal to generate the first and second optical signals.

25. The method according to claim 20, further comprising:
receiving at the first node a third optical signal representing a second data and having a second wavelength from a third node over a third link; and
receiving at the first node a fourth optical signal representing the second data and having the second wavelength from the third node over a fourth link,
wherein at least one of said third and fourth optical signals passes through at least one other node between the third node and the first node.

26. The method according to claim 25, wherein the first node comprises a first OADM and a second OADM, and
wherein receiving the third optical signal comprises taking the third optical signal off the third link through the first OADM, and receiving the fourth optical signal comprises taking the fourth optical signal off the fourth link through the second OADM.

27. The method according to claim 25, further comprising:
converting the third optical signal into a first electrical signal representative of the second data;
converting the fourth optical signal into a second electrical signal representative of the second data;
generating an electrical signal representative of the second data using the first and second electrical signals.

28. The method according to claim 27, wherein generating comprises selecting one of the first and second electrical signals that has a better quality.

29. The method according to claim 27, wherein generating comprises combining the first and second electrical signals.

30. The method according to claim 27, wherein the second data comprises a plurality of PDUs, the method further comprising routing the PDUs to one or more network devices.

31. A ring network comprising:
a plurality of nodes arranged in a ring topology,
wherein each node transmits same data on the ring both in a clockwise direction and a counter-clockwise direction concurrently.

32. The ring network according to claim 31, wherein the data in at least one of the clockwise and counter-clockwise directions passes through at least one other node before being received by one of the nodes.

33. The ring network according to claim 31, wherein the data transmitted by a particular node in both the clockwise and counter-clockwise directions are carried on a same wavelength.

34. The ring network according to claim 33, wherein the wavelength used by the particular node is different from wavelengths used by all of other nodes on the ring network.

35. The ring network according to claim 31, wherein the same data transmitted by a particular node in both the clockwise and counter-clockwise directions are received by a same node.
